# EUROPEAN PATENT SPECIFICATION

(11) **EP 0 596 866 B1**
(45) Date of publication and mention of the grant of the patent: **25.03.1998**
(21) Application number: 94101001.9
(22) Date of filing: 06.12.1991
(51) Int. Cl.: G02B 6/06, G02B 6/42, G01S 7/48, G02B 6/28, F21V 8/00

(54) **Optical Fiber**
Optische Faser
Fibre optique

(30) Priority: 22.12.1990 JP 404364/90 U
(43) Date of publication of application: 11.05.1994
(62) Divisional of application: 91120976.5
(73) Proprietor: Stanley Electric Co., Ltd., Meguro-ku Tokyo 153 (JP)
(72) Inventor: Ohmamyuda, Yukio, Sagamihara-shi, Kanagawa-ken (JP); Kimura, Shigeru, Yokohama-shi, Kanagawa-ken (JP); Tanabe, Toru, Machida-shi, Tokyo (JP); Iwasaki, Kazuhisa, Yokohama-shi, Kanagawa-ken (JP); Seto, Takao, Midori-ku, Yokohama-shi, Kanagawa-ken (JP); Kitamura, Hideki, Midori-ku, Yokohama-shi, Kanagawa-ken (JP); Sugimura, Kazuhiko, Yokohama-shi, Kanagawa-ken (JP); Senoo, Yasushi, Yokohama-shi, Kanagawa-ken (JP)
(74) Representative: Dr. Elisabeth Jung Dr. Jürgen Schirdewahn Dipl.-Ing. Claus Gernhardt

(56) References cited:
- US-A- 4 766 705
- APPLIED OPTICS vol. 22, no. 7 , 1 April 1983 , NEW YORK US pages 960 - 961 LADANY ET AL 'WEDGE COUPLING OF LASERS INTO MULTIMODE FIBERS'
- PATENT ABSTRACTS OF JAPAN vol. 13, no. 570 (P-977)18 December 1989 & JP-A-01 237 604 (FUJITSU) 22 September 1989

## Description

The invention concerns an optical fiber employable in a light source or light irradiating apparatus of an optical radar system. An optical radar system of the type in question comprises a light irradiating apparatus mounted on a vehicle and irradiating a light to a preceding vehicle, a light receiving apparatus mounted on the vehicle and receiving the light reflected from the preceding vehicle and a processing apparatus for processing the data for calculating the distance between the vehicles.

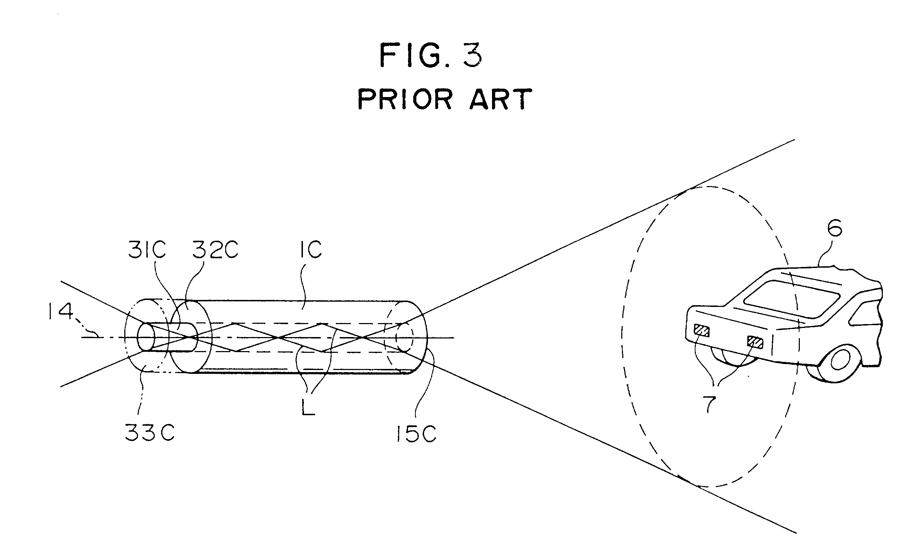

Fig. 3 is a schematic side view of a conventional optical radar system for which a conventional optical fiber is used. The optical fiber 1C is basically constructed by a core portion 31C having a relatively large refractive index and a peripheral clad portion 32C having a relatively small refractive index, and the light L introduced into the optical fiber 1C via an inlet port 33C linearly propagates through the core portion 3C in parallel with an optical axis 14 of the optical fiber 1C or propagates therethrough while repeating reflection along the full length of the boundary between the core portion 31C and the clad portion 32C to reach an outlet port 15C. Thereafter, the light L is irradiated from the outlet port 15C formed at a right angle relative to the optical axis 14 of the optical fiber 1C to the outside while expanding conically.

An angle with which the light L can be irradiated from the outlet port 15C of the optical fiber 1C is determined depending on the reflective index of the core portion 31C, the refractive index of the clad portion 32C or the like. Since the light L is conically irradiated at any rate, when the optical fiber 1C is used for an optical radar system, a motorcar 6 running ahead of a rear motorcar (not shown) is illuminated with a circular pattern so that a reflective plate 7 mounted on the rear part of the motorcar 6 is reliably illuminated with the conically expanded irradiated light.

While the motorcar 6 runs in the forward direction on the road surface, it is necessary that the light L is irradiated with a large angle as seen in the leftward/rightward direction but it is not necessary that the light L is irradiated with a large angle as seen in the upward/downward direction. In other words, a part of the light L excessively irradiated in the upward/downward direction becomes useless. This leads to a problem that a quantity of the light irradiated to the reflective plate 7 on the motorcar 6 to illuminate the same becomes short.

In view of the foregoing problem, there have been hitherto raised many requests for providing a light irradiating apparatus which assures that a light can be emitted from a light source with a uniform optical intensity of the emitted light but without fluctuation of distribution of the optical intensity of the same attributable to a pattern of emission of the light from the LED light source.

The present invention has been made with the aforementioned background in mind. Thus, according to the present invention there is provided an optical fiber as defined in the patent claim.

With the optical fiber constructed in accordance with the present invention, since the outlet end of the optical fiber is formed by the two inclined surfaces intersecting the optical axis of the optical fiber while exhibiting the wedge-shaped configuration, the light which has reached the outlet end of the optical fiber while repeating reflection along the whole length of the core portion of the optical fiber is irradiated from the two inclined surfaces with refraction toward the opposite inclined surface side. Thus, the lights which have been irradiated from the two inclined surfaces once intersect each other and then gradually expand as they leave the outlet end of the optical fiber, whereby they are projected toward, e.g., a reflective plate on the rear end of a motorcar running ahead of a rear motorcar located sufficently away from the outlet end of the optical fiber with an elliptical contour which extends at a right angle relative to the two inclined surfaces.

From Applied Optics, vol. 22, no. 7, 1 April 1983, New York US; pages 960 - 961; Ladany et al. "Wedge coupling of lasers into multimode fibers" there is known an optical fiber for lasers, wherein the input end has inclined surfaces and the output end has one inclined surface. However, only one inclined surface of the output end cannot control a suitable light distribution like in the present invention, but can control only a suitable direction of emitted light. In addition, there is no disclosure or suggestion concerning distributing an emitted light through the fiber.

Furthermore, from Patents Abstracts of Japan; vol 1, no. 570 (P-977) 18 December 1989 & JP-A-01 237 604 (Fujitsu) 22 September 1989 there is known an optical fiber having an input end comprising a surface at a right angle to the optical axis and an output end comprising an inclined surface and a surface parallel to the optical axis. Again such a structure cannot distribute light like the present invention, but can control only a direction of emitted light. In addition, said reference does not disclose or suggest anything concerning suitably distributing an emitted light via the fiber.

Finally, US-A-4 766 695 discloses a method for polishing the end of an optical fiber in contact with an abrasive tape at an angle corresponding to the final shape so as to have a roof-shaped tip having inclined surfaces arranged symmetrically relative to an optical axis. However, it does not disclose or suggest any particular effect when used for certain purposes.

Other objects, features and advantages of the present invention will become readily apparent from reading of the following description which has been made in conjunction with the accompanying drawings.

### BRIEF DESCRIPTION OF THE DRAWINGS

The present invention is illustrated in the following drawings in which:
Fig. 1 is a perspective view of an optical fiber in accordance with the present invention;
Fig. 2 is a schematic side view of an optical radar system for which the optical fiber shown in Fig. 1 is used;
Fig. 3 schematically illustrates a conventional optical fiber preferably employable for an optical radar system.

### DESCRIPTION OF THE PREFERRED EMBODIMENT

Now, the present invention will be described in detail hereinafter with reference to the accompanying drawings which illustrate the preferred embodiment of the present invention.

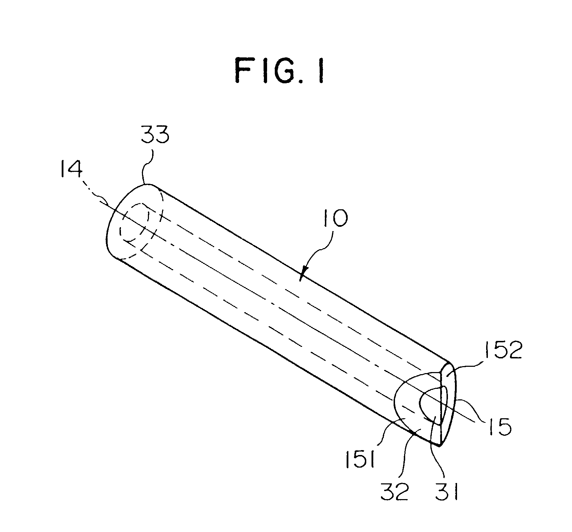

Fig. 1 is a perspective view of an optical fiber according to an embodiment of the present invention. The optical fiber designated by reference numeral 10 includes a core portion 31 having a relatively large refractive index and a peripheral clad portion 32 having a relatively small refractive index. An inlet end 33 of the optical fiber 10 is formed at a right angle relative to an optical axis 14 of the optical fiber 10 and an outlet end 32 of the same is formed by two inclined surfaces 151 and 152 intersecting each other symmetrically relative to the optical axis 14 of the optical fiber 10 while exhibiting a wedge-shaped configuration.

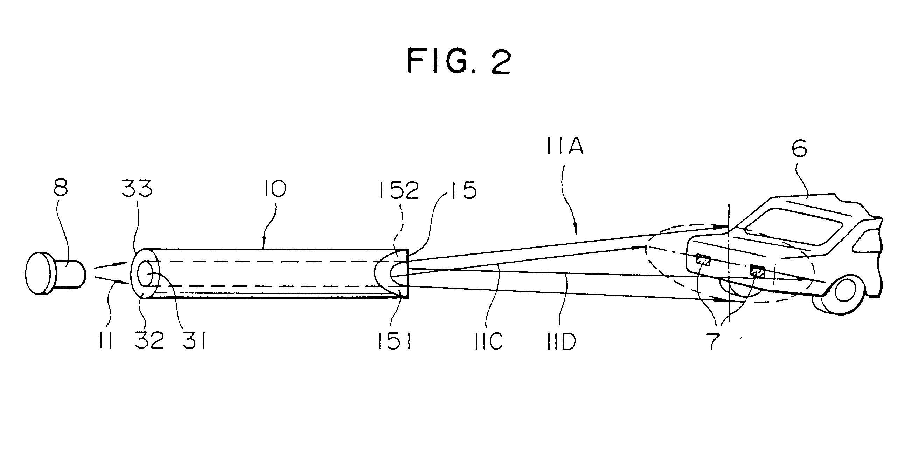

With the optical fiber 10 constructed as described above, when the optical axis 14 of the optical fiber 10 is laid in the horizontal direction with the inclined surfaces 151 and 152 intersecting each other at a right angle and a LED light source 8 is disposed opposite to the inlet end 33 of the optical fiber so that an emitted light 11 from the LED light source 8 is introduced into the core portion 31 as shown in Fig. 2, the emitted light 11 propagates through the optical fiber 10 to reach the outlet end 15 of the same, whereby it is irradiated toward a reflective plate 7 on the rear end of a motorcar 6.

A light irradiation angle at the outlet end 15 of the optical fiber 10 is determined not only on the refractive index of the core portion 31 and the refractive index of the clad portion 32 of the optical fiber 10 but also on an interesection angle of the emitted light 11 relative to the optical axis 14 during propagation of the emitted light 11 through the optical fiber 10. When only a light component propagating in parallel with the optical axis through the optical fiber 10 is considered for the purpose of simplification of understanding, the light component is irradiated from the outlet end 15 without refraction in the upward/downward direction, because the inclined surfaces 151 and 152 extend in the vertical direction. However, a light 11C irradiated from the inclined surface 151 is refracted toward the inclined surface 152 side and a light 11D irradiated from the inclined surface 152 is refracted toward the inclined surface 151 side, because the inclined surfaces 151 and 152 are arranged symmetrically relative to the optical axis 14 in the wedge-shaped configuration. Thus, both the lights 11C and 11D irradiated from the inclined surfaces 151 and 152 once intersect each other at the position located in the vicinity of the outlet end 15, and thereafter, as they leave the outlet end 15, they increasingly expand in the leftward/rightward direction. Thus, the light llA irradiated from the outer end 15 of the optical fiber 10 is projected onto a reflective plate 7 on the rear end of a motorcar 6 within the illuminating region having a transversely elongated elliptical contour.

The light 11 introduced into the optical fiber 10 from the light source 8 includes not only a light component introduced into the inlet end 33 at a right angle and then propagating through the core portion 31 of the optical fiber 10 in parallel with the optical axis 14 to reach the outlet end 15 of the same but also a light component introduced into the inlet end 33 at a certain angle and then propagating therethrough to reach the outlet end 33 while repeating reflection along the boundary surface between the core portion 31 and the clad portion 32. For this reason, an irradiation angle of the light 11 practically irradiated from the outlet end 15 of th optical fiber 10 is enlarged in every direction much more than the above-considered case. At any rate, however, since the light 11 is irradiated from the outlet end 15 of the optical fiber 10 in the transversely elongated elliptical configuration, the reflective plate 7 on the motorcar 6 running ahead of the rear motorcar (not shown) can be illuminated at a high optically efficiency.

As is apparent from the above description, when the optical fiber 10 of the present invention is used as light irradiating means for an optical radar system, the light irradiated from the optical fiber 10 can illuminate the reflective plate 7 on the motorcar 6 with a sufficient quantity of light while exhibiting minimized unnecessary expansion in the upward/downward direction but effective expansion in the horizontal direction, resulting in the reflective plate 7 on the rear end of the motorcar 6 being easily visually recognized by a driver on the rear motorcar. In addition, a distance between both the motorcars 6 and 7 can be measured with excellent efficiency by counting the time that elapses until the reflected light returns to the rear motorcar, by using suitable counting means.

Of course, the optical fiber 10 may be bent at a certain intermediate position thereof. In addition, the optical fiber 10 of the present invention can be used not only as light irradiating means for an optical radar system but also as general light irradiating means. It is obvious that a light irradiating lens may be disposed opposite to the outlet end 15 of the optical fiber 10.

While the present invention has been described above with respect to a preferred embodiment thereof, it should of course be understood that the present invention should not be limited only to this embodiment but various changes or modifications may be made without departure from the scope of the present invention as defined by the appended claim.

## Claims

1. An optical fiber (10) employable in a light source or light irradiating apparatus of an optical radar system, said optical fiber (10) having an inlet end formed at a right angle relative to the optical axis (14) of said fiber (10) characterised by said fiber further comprising an outlet end, whereby light entering the optical fiber (10) at the inlet end propagates through the fiber (10) and is irradiated into space at said outlet end, wherein the outlet end of said optical fiber (10) is formed by two inclined surfaces (151, 152) in a wedge-shaped configuration, said inclined surfaces (151, 152) intersecting each other symmetrically relative to said optical axis (14).

## Patentansprüche

1. Optische Faser (10), die in einer Lichtquelle oder einer Lichtabstrahlvorrichtung eines optischen Radarsystems verwendbar ist, wobei die optische Faser (10) ein Einlaßende hat, welches in einem rechten Winkel relativ zu der optischen Achse (14) der Faser (10) gebildet ist, dadurch gekennzeichnet, daß eine solche Faser weiterhin ein Auslaßende aufweist, wodurch Licht, welches am Eintrittsende in die optische Faser (10) eintritt, durch die Faser (10) hindurch fortschreitet und an dem genannten Auslaßende in den Raum abgestrahlt wird, wobei das Auslaßende der optischen Faser (10) durch zwei schräge Flächen (151,152) in keilförmiger Gestalt gebildet ist und die schrägen Flächen (151,152) sich relativ zu der optischen Achse (14) symmetrisch schneiden.

## Revendications

1. Fibre optique (10) pouvant être utilisée dans un appareil à source de lumière ou d'irradiation de lumière d'un système de radar optique, ladite fibre optique (10) ayant une extrémité d'entrée formée selon un angle droit par rapport à l'axe optique (14) de ladite fibre (10), caractérisée par le fait que cette fibre comprend en outre une extrémité de sortie, telle que la lumière entrant dans la fibre optique (10) à l'extrémité d'entrée, se propage à travers la fibre (10) et est irradiée dans l'espace à ladite extrémité de sortie, dans laquelle l'extrémité de sortie de ladite fibre optique (10) est formée par deux surfaces inclinées (151, 152) selon une configuration en forme de coin, lesdites surfaces inclinées (151, 152) se coupant entre elles symétriquement par rapport audit axe optique (14).
